Europäisches Patentamt

(19) European Patent Office

Office européen des brevets

(11) Publication number: **0 099 667**
**B1**

## (12) EUROPEAN PATENT SPECIFICATION

(45) Date of publication of patent specification: 01.10.86

(51) Int. Cl.⁴: **A 01 N 25/04, A 01 N 25/02**

(21) Application number: 83303731.0

(22) Date of filing: 28.06.83

(54) Increasing the effectiveness of synthetic, organic, oil-soluble insecticides.

(30) Priority: 30.06.82 US 393571

(43) Date of publication of application:
01.02.84 Bulletin 84/05

(45) Publication of the grant of the patent:
01.10.86 Bulletin 86/40

(84) Designated Contracting States:
BE DE FR IT NL

(56) References cited:
EP-A-0 051 195
AU-A- 529 748
FR-A-2 081 844
GB-A-1 107 226
GB-A-2 024 626
US-A-4 317 940

The file contains technical information
submitted after the application was filed and
not included in this specification

(73) Proprietor: THE DOW CHEMICAL COMPANY
2030 Dow Center Abbott Road P.O. Box 1967
Midland, MI 48640 (US)

(72) Inventor: Seymour, Keith Goldin
6003 Sturgeon Creek Parkway
Midland Michigan (US)
Inventor: Paroonagian, Doris Lucy
1731 Shirley Drive
Pleasant Hill California (US)
Inventor: Holoman, Smallwood Jr.
3616 Sweetbriar Terrace
Midland Michigan (US)
Inventor: Devries, Henry
1410 Stonewood Place
Concord California (US)

(74) Representative: Allard, Susan Joyce et al
BOULT, WADE & TENNANT 27 Furnival street
London EC4A 1PQ (GB)

Courier Press, Leamington Spa, England.

# 0 099 667

**Description**

The present invention is directed to a method of increasing the effectiveness of synthetic, oil-soluble organophosphate insecticides and to improved insecticidal compositions. In particular, the insecticidal activity of ultra low volume (ULV) insecticidal formulations and of emulsion insecticidal formulations is increased.

Insecticides are commercially important agricultural and industrial chemicals that are generally effective in killing, preventing or controlling the growth of undesirable insects. One important function that insecticides serve is to allow for an increased yield of valuable crops. Vast amounts of time and money are expended worldwide in search of new compounds that are effective insecticidal agents. Of the thousands of compounds screened each year for insecticidal activity, relatively very few ever become commercial products.

As an alternative approach to searching for new insecticidal agents, it is highly desirable to provide methods of improving the effectiveness of known insecticides. Improving the activity of known pesticides offers advantages of working with compounds having known physical, insecticidal, and toxicological characteristics. Improving the activity of insecticides results in lesser amounts needed to achieve desired effects, and, in turn, lesser amounts available to contaminate the environment.

Insecticides are commonly applied to foliage as ULV sprays or as more dilute emulsion sprays. Problems associated with spraying insecticides include loss of solvent, i.e., water, xylene, etc., by evaporation which greatly reduces the spray droplet size, causing loss of the active ingredients to spray drift; uneven coverage of treated areas or uneven distribution on the plants; and evaporation of the active insecticidal ingredients themselves, especially highly volatile insecticides. These are particularly annoying problems in certain insecticidal formulations where the sprays are delivered in relatively small droplets, having a diameter as small as about 50 microns, to facilitate spray distribution and penetration of the foliage canopy.

The present invention sets out to remedy the above problems encountered in the known insecticidal arts by providing a method of increasing the insecticidal effectiveness of insecticidal formulations. Additionally, the present invention provides (a) insecticidal formulations having lower volatilities when compared to known formulations resulting in an increased residual activity and (b) insecticidal formulations having increased deposition properties, both of these additional effects resulting in the use of lesser amounts of active insecticidal ingredients per acre.

AU—A—529748 discloses compositions for controlling sheep lice which contain a pyrethroid insecticide and optionally a liquid carrier which is a glycol such as polypropylene glycol such as polypropylene glycol.

GB—A—1107226 discloses dispersing agents which comprise at least one phenol-formaldehyde condensation product and at least one barely water-soluble polyalkylene glycol ether of a di- or polyhydric alcohol.

US—A—4317940 discloses surfactants which are the products of the addition of alkylene oxides to primary linear monohydric alcohols having from 6 to 10 carbon atoms. These surfactants are stated to be useful in a variety of applications such as wetting, washing and dispersing agents in the textile, leather, paper, paint, pharmaceutical and cosmetic industries and for use in pesticide solutions.

EP—A—0051195 discloses liquid compositions comprising a normally solid nonionic polyoxyalkylene block copolymer and ethylene glycol which are useful in pesticide concentrates.

GB—A—2024626 discloses that certain propoxylate derivatives such as polyoxypropylene ethers possess miticidal activity.

Polypropylene glycols are known materials with a wide variety of uses, such as, for example solvents, coupling agents, antifoam agents, intermediates and lubricants. Polypropylene glycols have been present in pesticidal formulations in small quantities as defoaming agents.

Accordingly, the present invention provides an insecticidal formulation containing one or more synthetic, organic, oil-soluble, water-insoluble organophosphate insecticides having a vapour pressure of at least $10^{-7}$ mmHg ($133,3.10^{-7}$ Pa) at a temperature of 15° to 40°C, which contains at least an equal volumetric amount, based on the volume of insecticide present in the formulation, of:

(a) a polypropylene glycol having an average molecular weight in the range of 1,000 to 5,000; or
(b) a water insoluble polybutylene glycol, the organophosphate insecticide being non-reactive with glycol (a) or glycol (b).

Of particular interest in the practice of the present invention is a method of increasing the insecticidal effectiveness of chlorpyrifos [O,O-diethyl-O-(3,5,6-trichlor-2-pyridyl)-phosphorothioate] and chlorpyrifos-methyl [O,O-dimethyl-O-(3,5,6-trichlor-2-pyridyl)-phosphorothioate] by combining with chlorpyrifos or chlorpyrifos-methyl an amount of a polypropylene glycol, having an average molecular weight of from 1,000 to 5,000, which increases the effectiveness of the chlorpyrifos and chlorpyrifos-methyl.

The terms "insecticide", "insecticidal" and "active" are meant to refer to synthetic, organic, oil-soluble organophosphates, and biologically active compositions containing these insecticides which are effective in killing, preventing or controlling the growth of undesirable pests, i.e., insects.

2

**0 099 667**

The term "insecticidal formulation" refers to any composition containing an insecticide and a carrier system therefore, and includes concentrates, which are to be diluted before use, such as emulsifiable concentrates, and ready-to-use compositions, such as ULV formulations. Carrier systems include water, organic solvents, such as, xylene, benzene, methylene chloride, isophorone, dimethyl formamide, paraffinic hydrocarbons and vegetable oils; and other formulation ingredients, such as, surfactants, antioxidants and emulsifiers.

The term "effective amount", when used to refer to the amount of additive to be added to an insecticide, describes a quantity of additive which, when combined with an insecticide or an insecticidal formulation, increases the effectiveness of such insecticide. The amount of additive required to increase the effectiveness of insecticides will vary but is an amount at least equal to the volume of insecticide present in the insecticidal formulation. It is preferable to add the present additives in amounts in the range of from 1 to 10 times the volumetric amount of insecticide present in the insecticidal formulation and even more preferable in the range of from 1 to 5.

Preferred additives are the polypropylene glycols, having an average molecular weight between 2,000 and 4,000. An especially preferred polypropylene glycol is a polypropylene glycol having an average molecular weight of 2,000. Another preferred polypropylene glycol is one that has an average molecular weight of 4,000.

The polypropylene glycol additives are known compounds and commercially available. They are generally prepared by adding propylene oxide to water or to propylene glycol. The commercially available products are generally identified by a number indicating the average molecular weight.

The polybutylene glycols are known compounds and are generally prepared by adding butylene oxide to water or to butylene glycol. Suitable polybutylene glycols are water insoluble.

Insecticides, which are acceptable in the practice of the present invention are those substantially water-insoluble (oil-soluble) insecticides having a vapor pressure of at least $10^{-7}$ mmHg ($133,3 \times 10^{-7}$ Pa) or higher at commonly encountered growing season or use temperatures, i.e., 15°—40°C. Additionally, the insecticides are those which will not react with the present polypropylene glycol or polybutylene glycol additives.

Suitable insecticides include chlorpyrifos (a preferred insecticide), sulprofos, chlorpyrifos-methyl and O,O-dimethy-O-(5-methyl-1-(2-pyridyl)-1H-1,2,4-triazol-3-yl)phosphorothioic acid ester.

In carrying out the present invention the polypropylene glycols or polybutylene glycol,s are combined, in an effective amount, with insecticides whereby the effectiveness of the insecticides is increased. The insecticides are then applied to insects or their habitats for insect control. Preferably, the insecticides are applied to valuable plants, for example, crops, ornamentals, pastures or turf for the control of undesirable pests. It is especially preferred to apply the present insecticidal formulations to crops. The additives are mixed with insecticides alone, and thereafter applied using well known application techniques, or the additive/insecticide combination is further admixed with known agricultural solvents and known agricultural formulating aids before application. The additives may also be mixed with commercially available insecticidal formulations before use.

While it is not critical to the practice of the present invention, the agricultural solvents are advantageously added to obtain a pesticidal formulation with a desirable viscosity to aid in the sprayability of the insecticidal formulations. The optimum viscosity for an insecticidal formulation is readily determinable by one skilled in the art and depends on a variety of factors such as, for example, the particular insecticide(s) employed in the formulation, the additive present in the formulation, the solvents present in the formulation, the type of equipment being employed in applying the formulation, and the mode of application, i.e., ULV, emulsion or solution by aerial or ground application.

Suitable agricultural solvents are generally water, petroleum solvents, esters, ketones and alcohols, lactones, and include xylene, xylene-range aromatic solvents, methylene chloride, 1,1,1-trichloroethane or combinations of solvents.

Other agricultural formulating aids, such as, antioxidants, emulsifiers or surfactants, are also admixed with the insecticidal formulations of the present invention. For example, emulsifiable concentrates, i.e., formulations that are to be mixed with water and applied as an emulsion, normally contain emulsifiers, such as the usual commercially available products. Emulsifiers are added to the present insecticidal formulations that are emulsifiable concentrates to ensure uniform distribution of the concentrates in water at the time of application. The emulsifiers are added in effective quantities and proportions which are readily determinable to one skilled in the art. Similarly, antioxidants, such as 2,6-di-tert-butyl-para-cresol (BHT) and phenothiazine, are added in effective quantities and proportions which are readily determinable to one skilled in the art.

Insecticides are commercially available generally as formulations containing agricultural carriers, solvents and adjuvants. As a practical matter these commercially available formulations are admixed with the hereinbefore defined additives to provide improved insecticidal formulations according to the present invention. For example, chlorpyrifos, is commercially available as Lorsban 4E brand insecticide, and, when combined with polypropylene glycol having an average molecular weight of about 2,000 in a ratio of about 1 part by volume of Lorsban 4E to 3 parts by volume polypropylene glycol (avg. MW=2,000), provides an insecticidal formulation having an increased effectiveness. Alternatively, insecticides are obtained in

3

substantially pure chemical form, i.e., bulk, technical grade, etc., and formulated by admixing with the present additives and known agricultural solvents and adjuvants.

When applying the present insecticidal formulations to crops, the combination of glycol (a) or glycol (b) and insecticide should be substantially free of any detrimental, i.e., phytotoxic, effects on the crops. For example, it has been found that polypropylene glycol having an average molecular weight of about 2,000 is an acceptable additive for chlorpyrifos which is applied to cotton crops, while on the other hand, it has been found unacceptable as an additive for chlorpyrifos which is applied to peanut crops because of the phytotoxic effects exhibited by the peanut plants to the combination of chlorpyrifos and polypropylene glycol having an average molecular weight of about 2,000. Polypropylene glycol having an average molecular weight of about 4,000 is an acceptable additive for chlorpyrifos which is to be applied to peanut crops. As a general rule, the greater the average molecular weight of the polypropylene glycol additive, the less phytotoxic effects the combination of chlorpyrifos and polypropylene glycol possesses. The choice of an acceptable additive as far as phytotoxicity to target crops is concerned is readily determinable by one skilled in the art.

In one embodiment of the present invention, the synthetic organic, oil-soluble, water-insoluble organophosphate insecticide, useful in controlling pests in a valuable crop, is mixed with glycol (a) or glycol (b) in an amount that is at least equal to the volumetric amount of the insecticide. The insecticidal formulation is then applied, neat, as a foliar spray to the crop by aircraft or by ground equipment. Alternatively, an emulsifier is added to the formulation and then the formulation is mixed with water and applied to the crop as an emulsion by employing aircraft or ground equipment. Also, the formulation is mixed with oil and applied employing known techniques.

In another embodiment of the present invention, the glycol (a) or glycol (b), in combination with an emulsifying agent, is provided as an emulsifiable tank mix additive which is to be separately added to the water carrier in the field tanks prior to application of the insecticidal formulations to crops.

In a preferred embodiment of the present invention, a synthetic, organic, oil-soluble, water-insoluble organophosphate insecticide, useful in controlling pests in valuable crops, is mixed with a polypropylene glycol having an average molecular weight of from 1,000 to 5,000, wherein the polypropylene glycol is present in an amount that is at least equal to the volumetric amount of insecticide. The pesticidal formulation is then applied, neat, as an ULV foliar spray to the crop by aircraft or by ground equipment. Alternatively, an emulsifier is added to the formulation and then the formulation is mixed with water and applied to the crop as an emulsion by employing aircraft or ground equipment.

In an especially preferred embodiment of the present invention, polypropylene glycol having an average molecular weight of about 2,000 is combined with chlorpyrifos wherein the polypropylene glycol is present in an volumetric amount at least equal to the volume of chlorpyrifos. This formulation is then sprayed on a cotton crop by aircraft or ground equipment to provide up to 1.12 kgs of chlorpyrifos per hectare of cotton crop. This formulation may be sprayed as an ULV spray, optionally containing a solvent such as, methylene chloride, or as an oil-in-water emulsion by adding an emulsifying agent to the formulation and then adding it to water.

In another preferred embodiment of the present invention, polypropylene glycol having an average molecular weight of about 4,000 is combined with chlorpyrifos wherein the polypropylene glycol is present in an amount at least equal to the volume of chlorpyrifos. This formulation is then sprayed on a peanut, soybean or corn crop by aircraft or ground equipment to provide up to 1.12 kgs of chlorpyrifos per hectare of peanut crop. This formulation may be sprayed as an ULV spray, optionally containing a solvent such as, methylene chloride, or as an oil-in-water emulsion by adding an emulsifying agent to the formulation and then adding it to water.

The following examples further illustrate the present invention.

Example 1

The following materials are combined to form a ULV formulation:

| | |
|---|---|
| chlorpyrifos | .06—.48 kg/l |
| polypropylene glycol (avg. MW 1,000—5,000) | 0.06—0.85 l/l |
| solvent (xylene, xylene range aromatic solvent (methylene chloride, trichloroethane) | 0—0.85 l/l |
| diluent (petroleum oil) | 0—0.75 l/l |
| emulsifier | 0—0.4 l/l |

The volume ratio of polypropylene glycol to chlorpyrifos is in the range of from 1:1 to 12:1. Chlorpyrifos density is taken as 1.428 g/ml for calculations used in this specification.

4

Example 2

The following ingredients were mixed to make insecticidal formulations according to the present invention.

Formulation A:

| | |
|---|---|
| technical grade chlorpyrifos (95% purity) | 12.7 g |
| methylene chloride | 9.8 ml |
| polypropylene glycol (avg. MW of 2,000) | 81.2 ml |
| | 100 ml |

Formulation B:

| | |
|---|---|
| technical grade chlorpyrifos (95% purity) | 12.7 gms |
| methylene chloride | 9.8 ml |
| polypropylene glycol (avg. MW of 1,200) | 81.2 ml |
| | 100 ml |

Formulation C:

| | |
|---|---|
| chlorpyrifos (as Lorsban 4E brand insecticide) | 25 ml |
| polypropylene glycol (avg. MW of 1,200) | 75 ml |
| | 100 ml |

Formulation D:

| | |
|---|---|
| chlorpyrifos (as Lorsban 4E brand insecticide) | 25 ml |
| polypropylene glycol (avg. MW of 2,000) | 75 ml |
| | 100 ml |

The following comparative formulations were prepared by mixing the following ingredients:

Formulation 1:

| | |
|---|---|
| technical grade chlorpyrifos (95% purity) | 12.7 g |
| methylene chloride | 9.8 ml |
| mineral oil (Drakeol 19) | 81.2 ml |
| | 100 ml |

Formulation 2:

| | |
|---|---|
| technical grade chlorpyrifos (95% purity) | 12.7 g |
| methylene chloride | 9.8 ml |
| mineral oil (Drakeol 5) | 81.2 ml |
| | 100 ml |

Formulation 3:

| | |
|---|---|
| chlorpyrifos (as Lorsban 4E brand insecticide) | 25 ml |
| cottonseed oil | 75 ml |
| | 100 ml |

Formulation 4:

| | |
|---|---|
| chlorpyrifos (as Lorsban 4E brand insecticide) | 25 ml |
| water | 75 ml |
| | 100 ml |

Formulation 5:

| | |
|---|---|
| technical grade chlorpyrifos (95% purity) | 12.7 g |
| methylene chloride | 9.8 ml |
| Volck oil | 81.2 ml |
| | 100 ml |

Formulation 6:

| | |
|---|---|
| technical grade chlorpyrifos (95% purity) | 12.7 g |
| methylene chloride | 9.8 ml |
| polypropylene glycol (avg. MW of 400) | 81.2 ml |
| | 100 ml |

Formulation 7:

| | |
|---|---|
| technical grade chlorpyrifos (95% purity) | 12.7 gms |
| methylene chloride | 9.8 ml |
| polyethylene glycol (avg. MW 600) | 81.2 ml |
| | 100 ml |

Formulation 8:

| | |
|---|---|
| chlorpyrifos (as Lorsban 4E brand insecticide) | 25 ml |
| polypropylene glycol (avg. MW of 400) | 75 ml |
| | 100 ml |

Formulation 9:

| | |
|---|---|
| chlorpyrifos (as Lorsban 4E brand insecticide) | 25 ml |
| polyethylene glycol (avg. MW of 600) | 75 ml |
| | 100 ml |

(Lorsban and Drakeol are Registered Trade Marks).

All of the above formulations contain 12 g of chlorpyrifos per 100 ml which is equivalent to 0.12 kg of chlorpyrifos per litre. Formulation A was tested against Formulations 1, 2, 3 and 4 for control of late, second instar tobacco budworm (TBW) larvae and all stages of two-spotted spider mites (2-SSM). The above formulations were sprayed on greenhouse grown cotton plants at a rate equivalent to 9.354 l of spray per hectare. Cotton plants were infested with all stages of two-spotted spider mites, *Tetranychus urticae* (2-SSM). These plants were then sprayed with the above-described formulations and then maintained in a greenhouse under favorable growing conditions. Percent mite mortality was determined five days post-treatment. Percent control is expressed as the total number of mobile forms found in the treatment divided by the total number of live mites in the control. Additional plants, not pre-infested with mites, were also sprayed with the same formulations, so as to define residual activity. These plants were maintained in the greenhouse for a period of five days, at which time they were infested with two-spotted spider mites. Percent mortality for these treatments was determined five days post-infestation using the same criteria as previously described. The results of these tests are listed in Table 1 under the "initial" and "residual" columns for percent 2-SSM control.

In addition to obtaining miticidal efficacy, the above formulations were also tested on late second instar tobacco budworm larvae, *Heliothis virescens*. Plants were sprayed with the above formulations and stored in the greenhouse under favorable growing conditions. Leaves from these plants were removed immediately after treatment and at two-days post-treatment to determine initial and residual control of tobacco budworm. Leaves were placed in petri dishes and infested with five (5) tobacco budworm larvae. Percent control was determined at 48 hours post-infestation. These results are listed in Table 1 under "initial" and "residual" columns for percent TBW control. All treatments were replicated three times and reported in Table 1 as the average percent control.

TABLE 1

| Formulation | Percent TBW control | | Percent 2-SSM control | |
|---|---|---|---|---|
| | Initial | 2 day residual | Initial | 5 day residual |
| A | 100 | 93 | 93 | 89 |
| 1 | 100 | 67 | 85 | 33 |
| 2 | 93 | 53 | 60 | 50 |
| 3 | 100 | 30 | 78 | 17 |
| 4 | 80 | 7 | 50 | 0 |

Example 3

Substantially the same procedures of Example 2 were employed to test Formulations A, B and C against Formulations 3, 4 and 5 for control of TBW (initial and two day residual control) and 2-SSM (initial and five day residual). Additionally, the control of 2-SSM eggs was evaluated by using cotton plants pre-infested with adults of two-spotted spider mites which were allowed sufficient time to lay eggs. Plants were then treated with tetra-ethyl pyrophosphate (tepp) (500 ppm) so as to kill the mobile forms while leaving viable mite eggs on the plants. These plants infested with viable mite eggs were then sprayed with the above formulations in a manner substantially similar to the other treatments. The results of the control of mite eggs was determined in five days and the results are listed in Table 2 under "eggs" column for initial percent control of 2-SSM. All of the above treatments utilized three replications and are listed in Table 2 as the average percent control.

TABLE 2

| | Percent TBW control | | Percent 2-SSM control | | |
| Formulation | Initial | 2 day residual | Initial Eggs | Mites | 5 day residual |
|---|---|---|---|---|---|
| A | 100 | 93 | 98 | 92 | 100 |
| B | 100 | 67 | 79 | 74 | 73 |
| C | 100 | 100 | 99 | 97 | 90 |
| 3 | 67 | 33 | 0 | 57 | 33 |
| 4 | 100 | 60 | 0 | 40 | 33 |
| 5 | 100 | 33 | 60 | 40 | 47 |

Example 4

Substantially the same procedures of Example 2 were employed to test Formulations A, B, C and D against Formulations 4, 6, 7, 8 and 9 for control of TBW and 2-SSM. All of the treatments utilized three replications and are listed in Table 3 as the average percent control.

TABLE 3

| | Percent TBW control | | Percent 2-SSM control | |
| Formulation | Initial | 2 day residual | Initial | 5 day residual |
|---|---|---|---|---|
| A | 100 | 100 | 100 | 99 |
| B | 100 | 93 | 99 | 93 |
| C | 100 | 100 | 97 | 91 |
| D | 100 | 100 | 100 | 100 |
| 4 | 100 | 60 | 39 | 36 |
| 6 | 100 | 87 | 93 | 75 |
| 7 | 100 | 93 | 94 | 41 |
| 8 | 100 | 100 | 88 | 92 |
| 9 | 100 | 87 | 73 | 46 |

Example 5

A field trial was conducted in Wayside, Mississippi, to determine the effectiveness of various insecticidal formulations when applied as ULV sprays. Seven formulations plus an untreated check were included in the trial, each in replicate. Each plot was 1 row (3.048 meters) and was covered by a 1.8×2.1×3.7 meter cage. The five or six plants in each cage were trimmed to leave only the top 1/3

**0 099 667**

branches. Eight days before treating, thirty tobacco budworm moths were released in each cage. The plots were treated with the formulations listed at the bottom of Table 4 at a rate of 1.12 kg of active ingredient per hectare. Each cage was removed just prior to treatment. Treatments were applied by Micro-Max® controlled droplet rotary atomizers mounted on a high-clearance sprayer. Two to three days after treatment, 3 to 4 plants in each plot were surveyed for live and dead larvae. At 3 days after treatment, 5 leaves in each plot were surveyed for the number of mobile 2-SSM. In order to measure residuality of insecticide, at 2 days after treatment, 4 leaves were picked from each plot and were placed in individual paper cups with 4 or 5 TBW second instar larvae. Live and dead larvae were counted 2 days later. The results are listed below in Table 4 as an average of the two replicates.

TABLE 4

| Treatment* | Spray volume (L/hectare) | % Corrected control of TBW larvae by Abbott's formula after 48—72 hours exposure | % Control of mites | % Corrected residual control of TBW on cotton leaves 2 days post-treatment using Abbott formula (48 hrs. exposure) |
|---|---|---|---|---|
| 1 | 4.677 | 87 | 80 | 69 |
| 2 | 4.677 | 83 | 78 | 38 |
| 3 | 9.354 | 75 | 75 | 20 |
| 4 | 6.548 | 73 | 69 | 58 |
| 5 | 4.677 | 71 | 73 | 35 |
| 6 | 9.354 | 70 | 69 | 58 |
| 7 | 9.354 | 68 | 49 | 15 |
| 8 | None (control) | 0 | 0 | 0 |

\* Treatment formulations tested are as follows:

1—Lorsban 4E brand insecticide and polypropylene glycol (avg. MW=2,000) in a 1:1 volume ratio resulting in a v/v ratio of polypropylene glycol to chlorpyrifos of 3:1.

2—0.24 kg chlorpyrifos per liter with methylene chloride and polypropylene glycol (avg. MW=2,000) wherein the v/v ratio of polypropylene glycol to chlorpyrifos is 4:1.

3—.12 kg chlorpyrifos per liter containing methylene chloride and polypropylene glycol (avg. MW=2,000) wherein the v/v ratio of polypropylene glycol to chloropyrifos is 9:1.

4—.18 kg chlorpyrifos per liter containing methylene chloride and polypropylene glycol (avg. MW=2,000) wherein the v/v ratio of polypropylene glycol to chlorpyrifos is 5.7:1.

5—.24 kg chlorpyrifos per liter containing Aromatic 100 (xylene range aromatic solvent), polypropylene glycol (avg. MW=2,000) and Atlox 3434F wherein the ratio of polypropylene glycol to chlorpyrifos is 2.9:1.

6—Lorsban 4E brand insecticide and polypropylene glycol (avg. MW=2,000) in a 1:3 volume ratio, resulting in a v/v ratio or polypropylene glycol to chlorpyrifos of 9:1.

7—Lorsban 4E brand insecticide diluted with water.

8—Untreated (nothing applied to plots).

Example 6

The evaluation of residual insecticidal activity on cotton leaves after an aerial application of chlorpyrifos was conducted at Leland, Mississippi. At various time intervals both leaves and squares were picked at random from each of the treated locations. Each treatment was replicated four times. Each replication consisted of a 4.05 hectare plot. The three treatments evaluated were as follows:

Treatment 1:
Lorsban 4E brand chlorpyrifos mixed in water and applied at a rate of 1.12 kgs chlorpyrifos/hectare in 7 liter total spray per hectare.

Treatment 2:
1 Part Lorsban 4E brand chlorpyrifos mixed with 3 parts polypropylene glycol (avg. MW=2,000) applied at a rate of 0.56 kg chlorpyrifos/hectare as a non-aqueous ULV spray.

8

**0 099 667**

Treatment 3:

Equal parts of Lorsban 4E brand chlorpyrifos and polypropylene glycol (avg. MW=2,000) applied at a rate of 0.56 kg chlorpyrifos/hectare as a non-aqueous ULV spray.

Ten leaves and squares were sampled from each replicate and placed into 90 ml paper cups. Each square was infested with boll weevils, *Anthonomus grandis*, (3 per square). Each leaf was infested with beet armyworm larvae, *Psodoptera exigua*, (5 third-fourth instar larvae/leaf). Insects were incubated in cups at room temperature. Mortality readings were made 48 hours post-infestation. Results are listed in Table 5.

TABLE 5

| Treatment | Average percent control of Boll Weevils after 48 hr. exposure on squares picked at 3 time intervals post-treatment | | | Average percent control of Beet Armyworm larvae after 48 hr. exposure on leaves picked at 5 intervals post-treatment | | | | |
|---|---|---|---|---|---|---|---|---|
| | 24 hours | 48 hours | 72 hours | 24 hours | 48 hours | 72 hours | 96 hours | 120 hours |
| 1 | 79 | 44 | 19 | 95 | 78 | 68 | 40 | 45 |
| 2 | 97 | 81 | 32 | 100 | 97 | 95 | 80 | 72 |
| 3 | 96 | 89 | 45 | 100 | 94 | 97 | 81 | 75 |

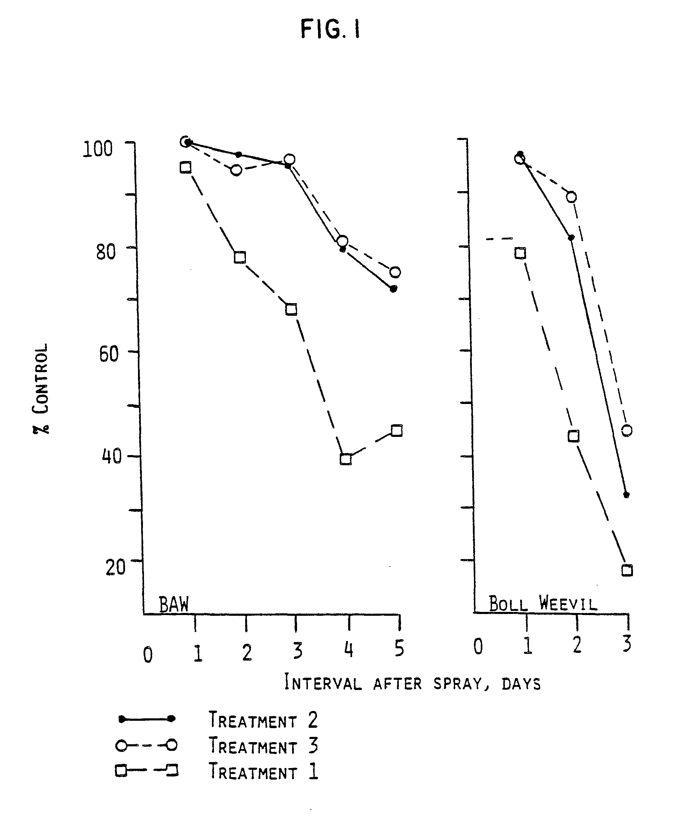

The results in Table 5 are further characterized by the graph shown in Figure 1:

TABLE 6

| Treatment | Kgs compound A per hectare | Residual control (%) | Field control (%) |
|---|---|---|---|
| 1. Compound A | 0.28 | 50 | 75 |
| 2. 1 part Compound A and 3 parts polypropylene glycol (avg. MW=2,000) | 0.28 | 85 | 91 |
| 3. Compound A | 0.56 | 88 | 84 |
| 4. 1 part Compound A and 3 parts polypropylene glycol (avg. MW=2,000) | 0.56 | 100 | 93 |

Example 7

O,O-dimethyl O-(5-methyl-1-(2-pyridyl)-1H-1,2,4-triazol-3-yl)phosphorothioic acid ester, hereinafter referred to as "Compound A", was applied to cotton previously infested with all ages of tobacco budworm larvae, primarily late second to third instar. Compound A was applied to the cotton as an oil-in-water emulsion by mixing the treatments described in Table 6 with enough water to apply either 0.28 or 0.56 kgs compound A/hectare at a spray volume of 93.54 L/hectare. Three plants from each plot were examined 48—72 hours post-treatment for the number of live and dead larvae. These results are listed in Table 6 under "Field Control (%)". At 24 hours post-treatments, leaves were sampled from each of the plots and were brought back to the laboratory and infested with late second instar tobacco budworm larvae. Mortality readings were taken 48 hours post-infestation, the results of which are listed in Table 6 under "Residual Control (%)".

Example 8

The following ingredients were admixed to form an improved insecticidal formulation of the present invention:

| Ingredient | Weight percent |
|---|---|
| chlorpyrifos | 22.9 |
| xylene plus inerts from technical chlorpyrifos | 18.7 |
| BHT | 0.1 |
| Polypropylene glycol (avg. MW=2,000) | 52.9 |
| Emulsifier (Atlox® 3403F, 3404F, 3409F in 10-75-15 weight ratio respectively) | 5.4 |
| | 100 |

9

# 0 099 667

Chlorpyrifos (specific gravity=1.428) and polypropylene glycol (avg. MW=2,000) (specific gravity=1,002) are present in the above formulation in a volume/volume ratio of 3.3 (polypropylene glycol/chlorpyrifos). The above formulation has a specific gravity of 1.05 at 20°C and contains .24 kgs chlorpyrifos per litre. This formulation is useful for application to cotton crops for the control of undesirable pests.

Example 9

The following ingredients were admixed to form an improved insecticidal formulation of the present invention:

| Ingredient | Weight percent |
|---|---|
| chlorpyrifos | 23.2 |
| xylene plus inerts from technical chlorpyrifos | 27.4 |
| Polypropylene glycol (avg. MW=4,000) | 43.8 |
| BHT | 0.1 |
| Atlox 3404F | 3.9 |
| Atlox 3409F | 1.6 |
| | 100 |

Chlorpyrifos (specific gravity=1.428) and polypropylene glycol (avg. MW=4,000) (specific gravity=1.005) are present in the above formulation in a volume/volume ratio of 2.7 (polypropylene glycol/chlorpyrifos). The above formulation has a specific gravity of 1.034 at 20°C and contains 0.24 kg chlorpyrifos per litre. This formulation is useful for application to plants for the control of undesirable pests.

Example 10

A commercially available insecticide was sprayed onto young greenhouse grown cotton and rice plants using a track sprayer delivering 23.39 L/ha. The insecticidal spray formulations were prepared by:

(1) mixing the commercially available insecticide with enough water to provide the desired amount of active ingredient (a.i.) per 23.39 liters of spray per hectare; or

(2) mixing commercial emulsifiable formulation of insecticide with polypropylene glycol (average MW=2,000) to provide 3—3.5 volumes of polypropylene glycol per volume of active ingredient (a.i.) and then diluting in sufficient water to provide the desired amount of a.i. per 23.39 liters of spray per hectare.

Immediately after spraying, some of the leaves of cotton plants were excised from the plant and placed in closed petri dishes with five (5) second instar tobacco budworm *(Heliothis virescens)* larvae. The petri dishes were then incubated at 25°C for 48 hours to determine percent mortality of the tobacco budworms. Additional leaves were assayed in a similar manner at various time intervals to determine length of residual control. Some of the insecticidal formulations were also evaluated on the two-spotted spider mite (2-SSM) by infesting cotton plants, immediately after they were sprayed, with 10 adult 2-SSM and thereafter maintaining the infested plants in temperature controlled chambers at 25°C. Percent mortality readings were made 48 hours post-infestation. Additional plants were infested with 10 2-SSM at various time intervals after spraying to determine residual control. The results are listed in Table 7. Control formulations consisted of water only (no insecticide).

TABLE 7

| Insecticidal formulation | Rate, kg a.i./ha | Percent control—days after treatment | |
|---|---|---|---|
| | | Budworm (8 days) | Mites (6 days) |
| Bolstar (sulprofos) and water | 0.28 | 31 | 0 |
| | 0.56 | 87 | 62 |
| 1 part by volume a.i. Bolstar, 3.2 parts by volume polypropylene glycol (avg. MW=2,000) and water | 0.28 | 80 | 85 |
| | 0.56 | 100 | 91 |
| Control | None | 0 | 0 |

10

Example 11

The following ingredients were admixed to form improved formulations of the present invention:

Formulation I

| | |
|---|---|
| Lorsban 4E insecticide | 2 ml |
| polypropylene glycol (avg. MW=2,000) | 3 ml |
| polybutylene glycol (avg. MW=2,000) | 3 ml |
| water | qs 40 ml |

Formulation J

| | |
|---|---|
| Lorsban 4E insecticide | 2 ml |
| polypropylene glycol (avg. MW=2,000) | 6 ml |
| water | qs 40 ml |

These formulations were then sprayed on greenhouse grown cotton plants at a rate equivalent to 0.56 kg/hectare (23.39 L/ha) in substantially the same manner as set forth in Example 10. Results for the control of 2-SSM are listed below in Table 8 compared to a control of Lorsban insecticide diluted with only water and an untreated check.

TABLE 8

| Formulation | Rate kg a.i./ha | Percent control of 2-SSM-days after treatment | | | |
|---|---|---|---|---|---|
| | | 0 | 1 day | 2 days | 3 days |
| Untreated check | 0 | 0 | 0 | 0 | 0 |
| Lorsban 4E+water | 0.56 | 92 | 56 | 39 | 24 |
| Formulation I | 0.56 | 96 | 72 | 61 | 57 |
| Formulation J | 0.56 | 98 | 100 | 82 | 61 |

On repeating the foregoing test procedures using other synthetic, organic, oil-soluble organophosphates in combination with the herein defined additives, i.e., polypropylene glycols having an average molecular weight of from 1,000 to 5,000, or water insoluble polybutylene glycols, substantially the same improvement in insecticidal effectiveness is obtained.

In further embodiments, the improved insecticidal formulations of the present invention may contain additional agricultural chemicals to increase the spectrum of activity. Such additional agricultural chemicals may be water-soluble insecticides, nematocides, arthropodicides, herbicides, fertilizers, micronutrients, fungicides or bactericides that are compatible with the formulations of the present invention and not antagonistic to the insecticidal activity of the present formulations. The agricultural chemicals in combination can generally be present in the ratio of from 1 to 100 parts of the insecticides of the present invention with from 100 to 1 parts of the additional agricultural chemicals.

**Claims**

1. An insecticidal formulation containing one or more synthetic, organic, oil-soluble, water-insoluble organophosphate insecticides having a vapour pressure of at least $10^{-7}$ mmHg ($133{,}3.10^{-7}$ Pa) at a temperature of 15° to 40°C, which contains at least an equal volumetric amount, based on the volume of insecticide present in the formulation, of:

(a) a polypropylene glycol having an average molecular weight in the range of 1,000 to 5,000; or
(b) a water insoluble polybutylene glycol,

the organophosphate insecticide being non-reactive with glycol (a) or glycol (b).

2. An insecticidal formulation as claimed in claim 1 and further comprising a diluent, carrier or adjuvant.

3. An insecticidal formulation as claimed in claim 2 wherein the polypropylene glycol has an average molecular weight in the range of from 1,000 to 5,000.

4. An insecticidal formulation as claimed in claim 3 wherein the polypropylene glycol has an average molecular weight of 2,000.

11

5. An insecticidal formulation as claimed in claim 3 wherein the polypropylene glycol has an average molecular weight of 4,000.

6. An insecticidal formulation as claimed in any one of the preceding claims wherein the insecticide is chlorpyrifos [O,O-diethyl-O-(3,5,6-trichlor-2-pyridyl)-phosphorothioate] or chlorpyrifos-methyl [O,O-dimethyl-O-(3,5,6-trichlor-2-pyridyl)-phosphorothioate].

7. A method of increasing the effectiveness of a synthetic, organic, oil-soluble, water-insoluble organophosphate insecticide having a vapour pressure of at least $10^{-7}$ mm Hg ($133,3.10^{-7}$ Pa) at a temperature of 15° to 40°C which comprises adding to the insecticide at least an equal volumetric amount, based on the volume of insecticide, of:

(a) a polypropylene glycol having an average molecular weight in the range of from 1,000 to 5,000; or

(b) a water insoluble polybutylene glycol,

the organophosphate insecticide being non-reactive with glycol (a) or glycol (b).

8. A method as claimed in claim 7 wherein the polypropylene glycol has an average molecular weight in the range of from 1,000 to 5,000.

9. A method as claimed in claim 8 wherein the polypropylene glycol has an average molecular weight of 2,000.

10. A method as claimed in claim 8 wherein the polypropylene glycol has an average molecular weight of 4,000.

11. A method as claimed in any one of claims 7 to 10 wherein the insecticide is chlorpyrifos [O,O-diethyl-O-(3,5,6-trichlor-2-pyridyl)-phosphorothioate] or chlorpyrifos-methyl [O,O-dimethyl-O-(3,5,6-trichlor-2-pyridyl)-phosphorothioate].

12. A method of controlling insects which comprises applying an insecticidally effective amount of a formulation according to claim 1 above to an insect or its environment.

13. A method as claimed in claim 12 wherein the polypropylene glycol has an average molecular weight of from 1,000 to 5,000.

14. A method as claimed in claim 12 wherein the polypropylene glycol has an average molecular weight of 2,000.

15. A method as claimed in claim 13 wherein the polypropylene glycol has an average molecular weight of 4,000.

16. A method as claimed in any one of claims 12 to 15 wherein the insecticide is chloropyrifos [O,O-diethyl-O-(3,5,6-trichlor-2-pyridyl)-phosphorothioate] or chlorpyrifos-methyl [O,O-dimethyl-O-(3,5,6-trichlor-2-pyridyl)-phosphorothioate].

**Patentansprüche**

1. Insektizide Formulierung, enthaltend ein oder mehrere synthetische, organische, öllösliche, wasserunlösliche Organophosphat-Insektizide mit einem Dampfdruck von mindestens $10^{-7}$ mmHg ($133,3 \cdot 10^{-7}$ Pa) bei einer Temperatur von 15° bis 40°C, die mindestens eine gleich volumetrische Menge, bezogen auf das in der Formulierung vorhandene Volumen des Insektizids, von:

(a) einem Polypropylenglykol mit einem durchschnittlichen Molekulargewicht im Bereich von 1 000 bis 5 000; oder

(b) einem wasserunlöslichen Polybutylenglykol

enthält, wobei das Organophosphat-Insektizid mit Glykol (a) oder Glykol (b) nicht reaktiv ist.

2. Insektizide Formulierung nach Anspruch 1, dadurch gekennzeichnet, daß sie außerdem ein Verdünnungsmittel, einen Träger oder ein Adjuvans enthält.

3. Insektizide Formulierung nach Anspruch 2, dadurch gekennzeichnet, daß das Polypropylenglykol ein mittleres Molekulargewicht im Bereich von 1 000 bis 5 000 besitzt.

4. Insektizide Formulierung nach Anspruch 3, dadurch gekennzeichnet, daß das Polypropylen ein mittleres Molekulargewicht von 2 000 besitzt.

5. Insektizide Formulierung nach Anspruch 3, dadurch gekennzeichnet, daß das Polypropylenglykol ein mittleres Molekulargewicht von 4 000 besitzt.

6. Insektizide Formulierung nach einem der vorhergehenden Ansprüche, dadurch gekennzeichnet, daß das Insektizid Chlorpyrifos[O,O-diethyl-O-(3,5,6-trichlor-2-pyridyl)-phosphorothioat] oder Chlorpyrifos-methyl[O,O-dimethyl-O-(3,5,6-trichlor-2-pyridyl)-phosphorothioat] ist.

7. Verfahren zur Erhöhung der Wirksamkeit eines synthetischen, organischen, öllöslichen, wasserunlöslichen Organophosphat-Insektizids mit einem Dampfdruck von mindestens $10^{-7}$ mm Hg ($133,3 \cdot 10^{-7}$ Pa) bei einer Temperatur von 15 bis 40°C, dadurch gekennzeichnet, daß man zu dem Insektizid in einer mindestens gleich volumetrischen Menge, bezogen auf das Volumen des Insektizids, ein:

(a) Polypropylenglykol mit einem mittleren Molekulargewicht im Bereich von 1 000 bis 5 000; oder

(b) ein wasserunlösliches Polybutylenglykol

zufügt, wobei das Organophosphat-Insektizid mit Glykol (a) oder Glykol (b) nicht reaktiv ist.

**0 099 667**

8. Verfahren nach Anspruch 7, dadurch gekennzeichnet, daß das Polypropylenglykol ein mittleres Molekulargewicht im Bereich von 1 000 bis 5 000 besitzt.

9. Verfahren nach Anspruch 8, dadurch gekennzeichnet, daß das Polypropylenglykol ein mittleres Molekulargewicht von 2 000 besitzt.

10. Verfahren nach Anspruch 8, dadurch gekennzeichnet, daß das Polypropylenglykol ein mittleres Molekulargewicht von 4 000 besitzt.

11. Verfahren nach einem der Ansprüche 7 bis 10, dadurch gekennzeichnet, daß das Insektizid Chlorpyrifos[O,O-diäthyl-O-(3,5,6-trichlor-2-pyridyl)-phosphorothioat] oder Chlorpyrifos-methyl[O,O-dimethyl-O-(3,5,6-trichlor-2-pyridyl)-phosphorothioat] ist.

12. Verfahren zur Bekämpfung von Insekten, dadurch gekennzeichnet, daß man eine insektizid wirksame Menge einer Formulierung gemäß Anspruch 1 auf ein Insekt oder seine Umgebung aufbringt.

13. Verfahren nach Anspruch 12, dadurch gekennzeichnet, daß das Polypropylenglykol ein mittleres Molekulargewicht von 1 000 bis 5 000 besitzt.

14. Verfahren nach Anspruch 12, dadurch gekennzeichnet, daß das Polypropylenglykol ein mittleres Molekulargewicht von 2 000 besitzt.

15. Verfahren nach Anspruch 13, dadurch gekennzeichnet, daß das Polypropylenglykol ein mittleres Molekulargewicht von 4 000 besitzt.

16. Verfahren nach einem der Ansprüche 12 bis 15, dadurch gekennzeichnet, daß das Insektizid Chlorpyrifos[O,O-diäthyl-O-(3,5,6-trichlor-2-pyridyl)-phosphorothioat] oder Chlorpyrifos-methyl[O,O-dimethyl-O-(3,5,6-trichlor-2-pyridyl)-phosphorothioat] ist.

## Revendications

1. Formulation insecticide contenant un ou plusieurs insecticides organophosphates, insolubles dans l'eau, solubles dans une huile, organiques, synthétiques, ayant une pression de vapeur d'au moins 133,3 $10^{-7}$ Pa ($10^{-7}$ mmHg) à une température de 15° à 40°C, qui contient, en un volume au moins égal à celui de l'insecticide présent dans la formulation,

(a) un polypropylèneglycol ayant une masse moléculaire moyenne dans l'intervalle de 1000 à 5000, ou
(b) un polybutylèneglycol insoluble dans l'eau,

l-insecticide organophosphate étant non-réactif vis-à-vis du glycol (a) ou du glycol (b).

2. Formulation insecticide selon la revendication 1, et comprenant en outre un diluant, un support ou un adjuvant.

3. Formulation insecticide selon la revendication 2, dans laquelle le polypropylèneglycol a une masse moléculaire moyenne dans l'intervalle de 1000 à 5000.

4. Formulation insecticide selon la revendication 3, dans laquelle le polypropylèneglycol a une masse moléculaire moyenne de 2000.

5. Formulation insecticide selon la revendication 3, dans laquelle le polypropylèneglycol a une masse moléculaire de 4000.

6. Formulation insecticide selon l'une quelconque des revendications précédentes, dans laquelle l'insecticide est le chlorpyrifos (phosphorothioate de O,O-diéthyle et de O-(3,5,6-trichloro-2-pyridyle)), ou le chlorpyrifos-méthyl (phosphorothioate de O,O-diméthyle et de O-(3,5,6-trichloro-2-pyridyle)).

7. Procédé pour augmenter l'efficacité d'un insecticide organophosphate insoluble dans l'eau, soluble dans l'huile, organique, synthétique, ayant une pression de vapeur d'au moins 133,3 $10^{-7}$ Pa ($10^{-7}$ mm Hg) à une température de 15 à 40°C, qui consiste à ajouter à l'insecticide, en un volume au moins égal à celui de l'insecticide,

(a) un polypropylèneglycol ayant une masse moléculaire moyenne dans l'intervalle de 1000 à 5000, ou
(b) un polybutylèneglycol insoluble dans l'eau,

l'insecticide organophosphate étant non-réactif vis-à-vis du glycol (a) ou du glycol (b).

8. Procédé selon la revendication 7, dans lequel le polypropylèneglycol a une masse moléculaire moyenne dans l'intervalle de 1000 à 5000.

9. Procédé selon la revendication 8, dans lequel le polypropylèneglycol a une masse moléculaire moyenne de 2000.

10. Procédé selon la revendication 8, dans lequel le polypropylèneglycol a une masse moléculaire moyenne de 4000.

11. Procédé selon l'une quelconque des revendications 7 à 10, dans lequel l'insecticide est le chlorpyrifos (phosphorothioate de O,O-diéthyl et de O-(3,5,6-trichloro-2-pyridyle)) ou le chlorpyrifos-méthyl (phosphorothioate de O,O-diméthyle et de O-(3,5,6-trichloro-2-pyridyle)).

12. Procédé pour la maîtrise des insectes, qui consiste à appliquer une quantité à effet insecticide d'une formulation selon la revendication 1, au-dessus d'un insecte ou de son environnement.

13. Procédé selon la revendication 12, dans lequel le polypropylèneglycol a une masse moléculaire moyenne de 1000 à 5000.

13

# 0 099 667

14. Procédé selon la revendication 12, dans lequel le polypropylèneglycol a une masse moléculaire de 2000.

15. Procédé selon la revendication 13, dans lequel le polypropylèneglycol a une masse moléculaire moyenne de 4000.

16. Procédé selon l'une quelconque des revendications 12 à 15, dans lequel l'insecticide est le chlorpyrifos (phosphorothioate de O,O-diéthyle et de O-(3,5,6-trichloro-2-pyridyle)) ou le chlorpyrifos-méthyl (phosphorothioate de O,O-diméthyle et de O-(3,5,6-trichloro-2-pyridyle)).

## FIG. I

% CONTROL

BAW

BOLL WEEVIL

INTERVAL AFTER SPRAY, DAYS

●——● TREATMENT 2
○--○ TREATMENT 3
□--□ TREATMENT 1